# EUROPÄISCHE PATENTSCHRIFT

(11) **EP 2 150 730 B1**
(45) Veröffentlichungstag und Bekanntmachung des Hinweises auf die Patenterteilung: **04.09.2013**
(21) Anmeldenummer: 08736602.7
(22) Anmeldetag: 28.04.2008
(51) Int. Cl.: F16H 61/70

(54) **SCHALTVERFAHREN FÜR EIN HANDSCHALTBARES STUFENGETRIEBE FÜR KRAFTFAHRZEUGE**
SHIFT METHOD FOR A MANUALLY SHIFTABLE MULTISTEP TRANSMISSION FOR MOTOR VEHICLES
PROCÉDÉ DE COMMANDE D'UNE BOÎTE DE VITESSES MULTI-ÉTAGÉE MÉCANIQUE UTILISÉE DANS DES VÉHICULES À MOTEUR

(30) Priorität: 26.05.2007 DE 102007024793
(43) Veröffentlichungstag der Anmeldung: 10.02.2010
(73) Patentinhaber: ZF Friedrichshafen AG, 88038 Friedrichshafen (DE)
(72) Erfinder: PIGOZZI, Gianmaria, I-25127 Brescia (IT)
(86) Internationale Anmeldenummer: PCT/EP2008/055132
(87) Internationale Veröffentlichungsnummer: WO 2008/145467

(56) Entgegenhaltungen:
- EP-A- 1 555 462
- DE-A1- 10 152 860
- US-A1- 2005 066 755

## Beschreibung

Die Erfindung betrifft ein Verfahren zur automatischen Schaltung von Stufen einer Rangegruppe nach dem Oberbegriff des Patentanspruches 1 , wie aus des US 2005/0066755 bekannt.

Es ist bekannt, z. B. aus G. Lechner, H. Naunheimer, Fahrzeuggetriebe, 1994, S. 149 - 158 oder J. Looman, Zahnradgetriebe, 1996, Seite 257 - 273, Handschaltgetriebe mit höheren Gangzahlen, z. B. mit acht oder mehr Gängen als Mehr-Gruppengetriebe auszubilden, wobei das Gesamtgetriebe aus einem Hauptgetriebe mit z. B. vier schaltbaren Zahnradstufen sowie einer Vorschaltgruppe und/oder einer Nachschaltgruppe bestehen kann, welche als so genannte Split- oder Rangegruppe ausgelegt sein können. Durch eine vorgeschaltete Splitgruppe können die Gänge des Hauptgetriebes z. B. in ihrer Anzahl verdoppelt und "verdichtet" werden, wodurch feinere Gangabstufungen erreichbar sind. Durch eine nachgeschaltete Rangegruppe (auch Bereichsgruppe genannt) kann die Zahl der Gänge des Hauptgetriebes ebenfalls verdoppelt und gleichzeitig der Bereich des Getriebes, d. h. die Gangfolge erweitert werden, z. B. für eine Langsamfahrt oder eine Schnellfahrt (im Gelände oder auf der Straße).

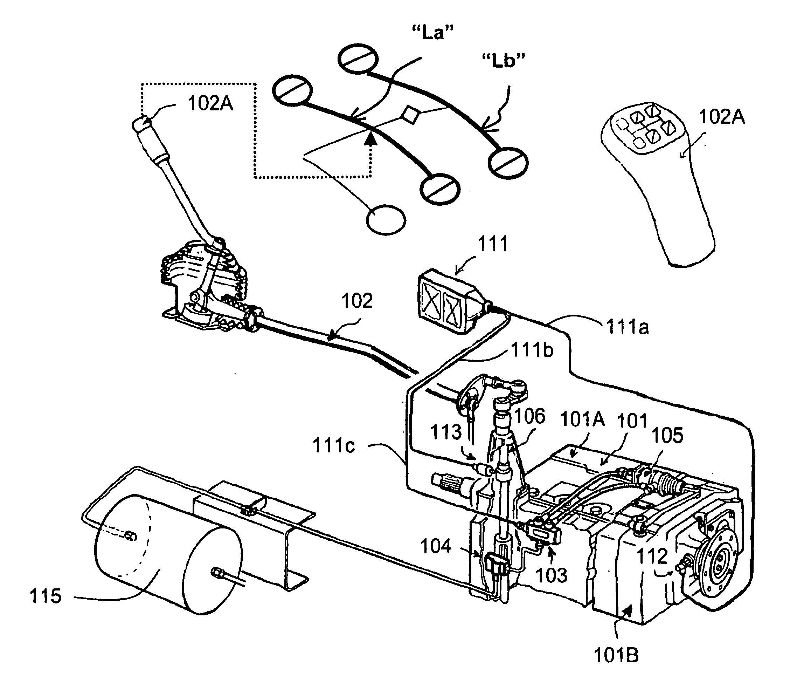

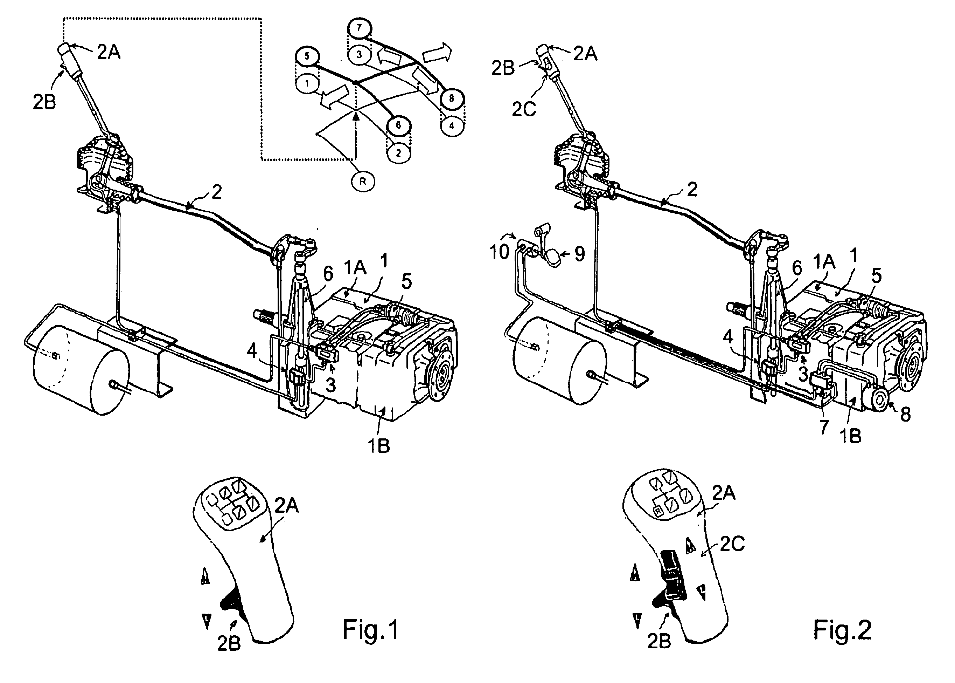

In Fig. 1 ist ein bekanntes, von Hand schaltbares (kurz: handschaltbares) Stufengetriebe 1 dargestellt, welches ein Hauptgetriebe 1 A mit verschiedenen Gängen und ein nachgeschaltetes, als Rangegruppe ausgebildetes Gruppengetriebe 1 B aufweist. Die Rangegruppe 1 B besitzt zwei Gänge und verdoppelt die Anzahl der Gänge des Hauptgetriebes 1 A. Der erste Gang der Rangegruppe 1 B hat ein Übersetzungsverhältnis von 1:1; wenn der erste Gang eingelegt ist, läuft die Rangegruppe in der Rangestufe "hoch" (schnell).

Der zweite Gang der Rangegruppe 1 B hat ein höheres Übersetzungsverhältnis als der niedrigste Gang des Hauptgetriebes; wenn der zweite Gang eingelegt ist, läuft die Rangegruppe 1 B auf der Rangestufe "niedrig" (langsam). Die Rangestufe wird in der Regel vorgewählt, bevor die Schaltung der Gänge erfolgt, und zwar durch den Fahrer des Fahrzeuges, welcher einen pneumatischen oder elektrischen Rangeschalter 2B am Schalthebel 2A betätigt. Der Rangeschalter 2B steuert ein pneumatisches oder elektrisches 5-Wegeventil 3 an, wodurch Druckluft zu einem Rangestellmotor 5 (Druckluftzylinder) geleitet wird. Der Druckluftzylinder 5 schaltet die Rangestufe "hoch" oder "niedrig", wobei die Schaltung erfolgt, sobald der vorherige Gang (im Hauptgetriebe) herausgenommen ist, d. h. nur, wenn sich das Getriebe in der Position "neutral" befindet. Dies wird durch das pneumatische 3-Wege-Auslöseventil 4 ermöglicht, welches die Zuführung von Druckluft aus einem Drucklufttank (ohne Bezugszahl) zum Rangeumschaltventil 3 und damit zum Rangedruckluftzylinder 5 erlaubt.

**Fig. 2** zeigt ebenfalls ein bekanntes Handschaltgetriebe, entsprechend dem Ausführungsbeispiel gemäß Fig. 1, jedoch zusätzlich mit einer Splitgruppe, welche in das Hauptgetriebe 1 A integriert ist. Zur Betätigung der Splitgruppe weist der Schalthebel 2A einen zusätzlichen pneumatischen oder elektrischen Schalter 2C auf, welcher - vor der Einleitung der Gangschaltung - eine Splitstufe "niedrig" oder "hoch" vorwählt. Der Splitschalter 2C betätigt ein pneumatisches oder elektrisches 5-Wege-Umschaltventil 7 der Splitgruppe, wodurch Druckluft einem Splitstellmotor 8 (Druckluftzylinder) zur Schaltung der Splitstufe "hoch" oder "niedrig" zugeleitet wird. Die Druckluftzufuhr erfolgt, sobald das Kupplungspedal 9 niedergedrückt ist, d. h. wenn die Kupplung gelöst ist; nur in diesem Zustand erlaubt das pneumatische 3-Wege-Auslöseventil 10 die Zufuhr von Druckluft aus dem Drucklufttank zum Umschaltventil 7 und dadurch zum Druckluftzylinder 8 für die Splitgruppe.

Die Schaltung der Gänge des Hauptgetriebes erfolgt in der Regel durch eine mechanische Verbindung 2 zwischen dem Schalthebel 2A und der Getriebeschaltwelle 6, welche Vorrichtungen zum Kuppeln der Zahnräder, z. B. Schaltmuffen mit Klauenkupplung oder mit Synchronringen über Stangen oder Gabeln betätigt. Die Bewegung des Schalthebels zum Hoch- oder Rückschalten der Gänge (in Schaltgassen) oder zum Wählen der Gänge in einer Links-Rechtsbewegung (in einer Wählgasse) ergibt ein Schaltbild in Form eines "H". Wenn das H-Schema des Hauptgetriebes beide Rangestufen ("hoch" und "niedrig") umfasst, wird dieses Muster im Allgemeinen als "Einfach-H"-Schaltbild oder als "überlagertes H"-Schaltbild bezeichnet, weil zwei H-Ebenen übereinander angeordnet sind. Ein derartiges "Einfach-H"-Schaltbild ist in Fig. 1 dargestellt, wobei die Gänge 1 bis 4 in einer unteren und die Gänge 5 bis 8 in einer oberen Ebene angeordnet sind. Handschaltgetriebe mit einem "Einfach-H"-Schaltbild für die Schaltbewegung sind typischerweise 8-, 9- oder 10-Ganggetriebe, welche keine Splitgruppe aufweisen, und 12-, 13-, 14- oder 16-Gang-getriebe, welche dagegen eine Splitgruppe aufweisen.

Ein Problem bei den bekannten Handschaltgetrieben kann sich ergeben, wenn der Fahrer des Fahrzeuges vergisst, den Rangeschalter zu betätigen, um die betreffende Rangestufe vorzuwählen. Um derartige Schaltfehler zu vermeiden, wurden auf dem Markt verschiedene Kontrollsysteme zur Vermeidung von zu hohen Drehzahlen (Überdrehzahlen) eingeführt. Ohne ausführlich auf die bekannten Systeme einzugehen, kann jedoch gesagt werden, dass diese darauf beruhen, dass Schaltfehler durch Blockierung von kritischen Schaltbewegungen vorgenommen werden. Eine vollständige Sicherheit gegen Schaltfehler ist durch die bekannten Überdrehzahl-Kontrollsysteme jedoch nicht erreichbar. Darüber hinaus erhöhen derartige Kontrollsysteme die Herstellungskosten des Getriebes.

Es ist Aufgabe der vorliegenden Erfindung, ein Verfahren zur Vermeidung von Schaltfehlern, insbesondere bei der Schaltung einer Rangegruppe bereitzustellen.

Die Aufgabe der Erfindung wird durch ein Verfahren mit den Merkmalen des Patentanspruches 1 gelöst, welches für ein Getriebe mit Range-, jedoch ohne Splitgruppe auf der Erfassung der Getriebeabtriebsdrehzahl und der Erfassung der Schaltgasse des zu schaltenden Ganges basiert. Darüber hinaus werden drei verschiedene Bedingungen als Kriterium für die Vorwahl der Rangestufe, nämlich ein unterer Drehzahlbereich (Zone A), ein hoher Drehzahlbereich (Zone B) und ein mittlerer Drehzahlbereich (Zone C) definiert. Der Zone A ist die Rangestufe "niedrig" unabhängig vom zu wählenden Gang zugeordnet, der Zone B ist die Rangestufe "hoch" unabhängig von dem zu schaltenden Gang zugeordnet und der Zone C ist entweder die Rangestufe "hoch" oder "niedrig" zugeordnet, jedoch in Abhängigkeit von dem zu schaltenden Gang, d. h. der vom Sensor sensierten Schaltgasse. Damit ist eine eindeutige Zuordnung für den automatisierten Ablauf der Schaltung der Rangestufen gegeben, die eine hohe Betriebssicherheit garantiert.

Weitere bevorzugte Merkmale der Erfindung sind in den Ansprüchen 2-4 enthalten.

Ausführungsbeispiele der Erfindung sind in der Zeichnung dargestellt und werden im Folgenden näher beschrieben.
Es zeigen:
- Fig. 3: ein erfindungsgemäßes Handschaltgetriebe mit Rangegruppe und Regeleinrichtung,
- Fig. 4: ein erfindungsgemäßes Handschaltgetriebe mit Range- und Splitgruppe sowie einer Regeleinrichtung,
- Fig. 5: "Einfach-H"-Schaltbilder für verschiedene Gangzahlen (8 bis 16),
- Fig. 6: ein Drehzahldiagramm für ein 9-Gang-Getriebe,
- Fig. 7: ein Drehzahldiagramm für ein 9-Gang-Getriebe,
- Fig. 8: ein Drehzahldiagramm für ein 10-Gang-Getriebe,
- Fig. 9: ein Drehzahldiagramm für ein 16-Gang-Getriebe mit einer Splitgruppe,
- Fig. 10: ein Drehzahldiagramm für ein 16-Gang-Getriebe mit Schaltbildern,
- Fig. 11: ein Drehzahldiagramm mit Schaltbildern für ein 12-Gang-Getriebe,
- Fig. 12: ein Drehzahldiagramm mit Schaltbildern für ein 13-Gang-Getriebe,
- Fig. 13: ein Drehzahldiagramm mit Schaltbildern für ein 14-Gang-Getriebe,
- Fig. 14: eine Regeleinrichtung zur automatischen Schaltung einer Rangegruppe mit Funktionsschema für Zone A,
- Fig. 15: die Regeleinrichtung mit Funktionsschema für Zone B,
- Fig. 16: die Regeleinrichtung mit Funktionsschema für Zone C und Schaltgasse "La",
- Fig. 17: die Regeleinrichtung mit Funktionsschema für Zone C und Schaltgasse "Lb" und
- Fig. 18: eine erweiterte Regeleinrichtung für ein Getriebe mit Splitgruppe.

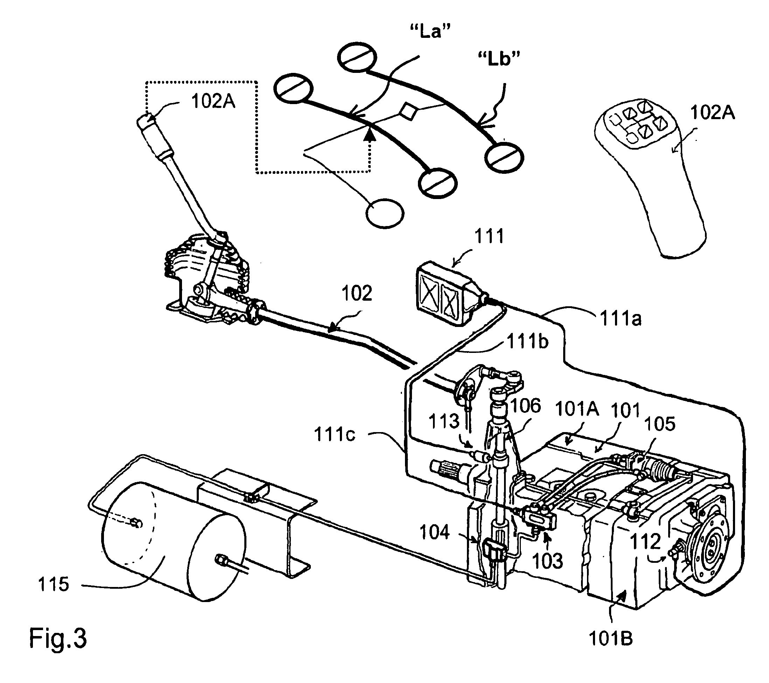

Fig. 3 zeigt in schematischer Darstellung ein erstes Ausführungsbeispiel , welches teilweise dem in Fig. 1 dargestellten bekannten Getriebe entspricht - insoweit werden für gleiche Teile in Fig. 3 die in Fig. 1 verwendeten, um 100 erhöhten Bezugszahlen verwendet. Die Darstellung zeigt ein Handschaltgetriebe 101, welches ein Hauptgetriebe 101 A und ein als Rangegruppe 101B ausgebildetes Nachschaltgetriebe umfasst. Das Getriebe 101 wird für ein Kraftfahrzeug verwendet, ist als Stufengetriebe ausgebildet und wird über einen Schalthebel mit Schaltknopf 102A, eine mechanische Verbindung 102 und eine Getriebeschaltwelle 106 geschaltet. Die Rangegruppe 101 B wird über einen Druckluftzylinder 105 geschaltet, der von einem pneumatischen Umschaltventil 103 angesteuert wird. Druckluft wird aus einem Druckluftspeicher 115 über ein Auslöseventil 104 zugeführt. Dem Handschaltgetriebe 101 ist eine elektronische Steuereinheit 111 zugeordnet, welche über Signalleitungen 111 a, 111 b, 111 c mit einem induktiven Drehzahlsensor 112 zur Erfassung der Getriebeabtriebsdrehzahl, mit einem als elektrischem Schalter 113 ausgebildeten Sensor zur Erfassung der Schaltgasse des zu schaltenden Ganges sowie mit dem Umschaltventil 103 zur Schaltung der Rangegruppe 101 B verbunden ist. Die Schaltung der einzelnen Gänge erfolgt über den Schalthebel 102A nach einem "Einfach-H"-Schaltbild, d. h. durch eine Rechts-LinksBewegung in einer so genannten Wählgasse und eine Vor- und ZurückBewegung in zwei Schaltgassen, die durch die Buchstaben "La" und "Lb" gekennzeichnet sind. Das in Fig. 3 dargestellte Getriebe 101 weist keine Splittruppe auf.

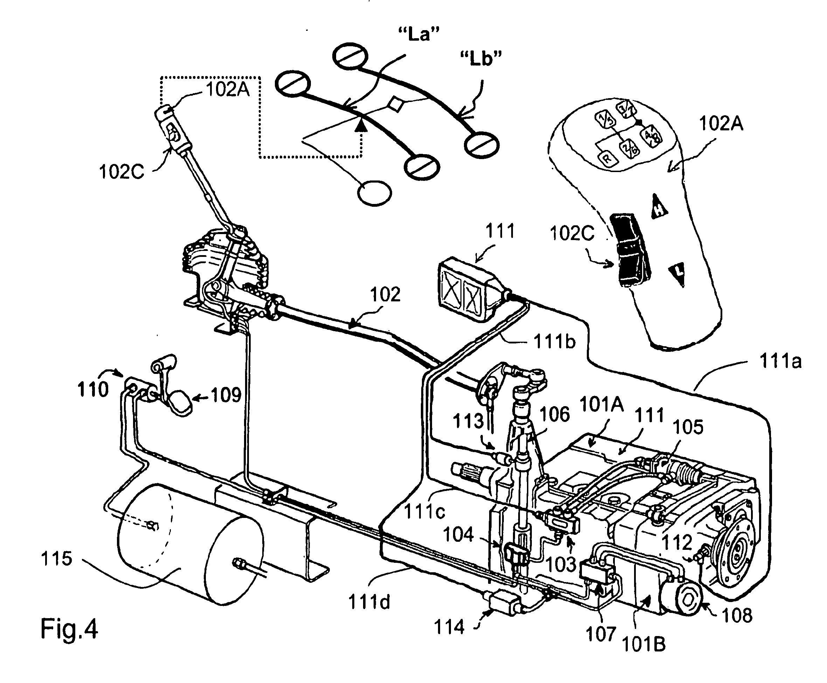

Fig. 4 zeigt ein zweites Ausführungsbeispiel, welches dem bekannten Getriebe mit Splitgruppe gemäß Fig. 2 entspricht. Die Bezugszahlen in Fig. 4 sind - soweit sie gleiche Teile wie in Fig. 2 betreffen - die gleichen, jedoch um 100 erhöht. Das Getriebe 101 weist zusätzlich zu der Rangegruppe 101 B eine nicht dargestellte, in das Hauptgetriebe 101 A integrierte Splitgruppe auf, welche über einen pneumatischen Schalter 102C am Schaltknopf 102A angesteuert wird. Der Fahrer des Fahrzeuges kann über den Schalter 102C eine Splitstufe "hoch" und eine Splitstufe "niedrig" schalten. Zusätzlich zu dem Getriebe gemäß Fig. 3 weist das in Fig. 4 dargestellte Getriebe ein elektropneumatisches Umschaltventil 107 zur Ansteuerung eines Stellmotors 108 (Druckluftzylinder) auf, über welchen die Splitstufen geschaltet werden. Der Druckluftspeicher 115 liefert Druckluft über ein Auslöseventil 110, welches bei niedergedrücktem Kupplungspedal 109 geöffnet wird. Die elektronische Steuereinheit 111 ist zusätzlich über eine Steuerleitung 111 d mit einem elektrischen Druckluftschalter 114 verbunden, welcher die Vorwahl der Splitstufe erfasst. Der Schalter 114 fungiert somit als weiterer Sensor zur Erfassung der jeweiligen Splitstufe.

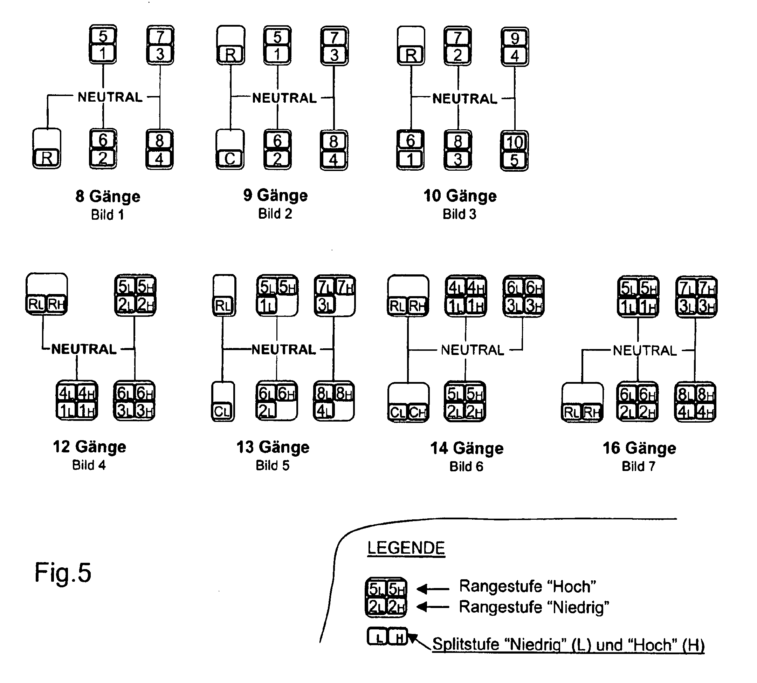

**Fig. 5** zeigt für ein Getriebe mit Range- und Splitgruppe verschiedene Schaltbilder für Getriebe mit unterschiedlicher Gangzahl, nämlich Bild 1 für 8 Gänge, Bild 2 für 9 Gänge, Bild 3 für 10 Gänge, Bild 4 für 12 Gänge, Bild 5 für 13 Gänge, Bild 6 für 14 Gänge und Bild 7 für 16 Gänge. Alle Schaltbilder 1 bis 7 sind "Einfach-H"-Schaltbilder, wobei die Gänge mit Zahlen und Buchstaben bezeichnet sind: der Buchstabe R bedeutet Rückwärtsgang, der Buchstabe C bedeutet Crawler oder Kriechgang. Die in Fig. 5 unten dargestellte Legende erklärt die Schaltungssystematik: "5L" bedeutet 5. Gang, Rangestufe "hoch" und Splitstufe "niedrig".

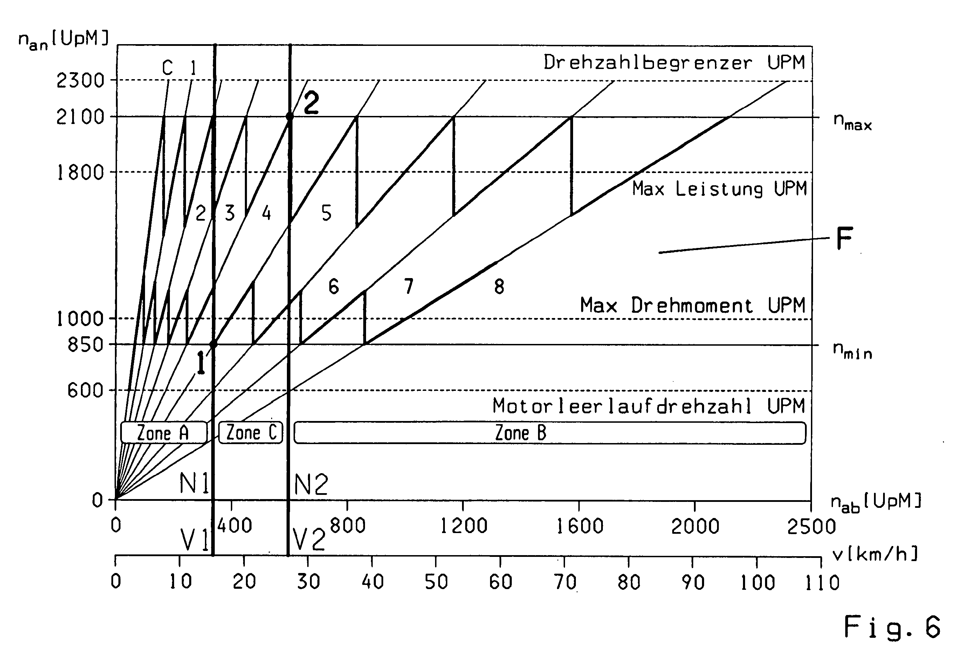

**Fig. 6** zeigt ein Drehzahldiagramm, für welches beispielhaft ein 9-Gang-Getriebe gewählt wurde, dessen Schaltbild in Fig. 5 als Bild 2 dargestellt ist. Auf der y-Achse ist die Antriebsdrehzahl nₐₙ des Getriebes, welche der Motordrehzahl entspricht, in UpM (Umdrehungen pro Minute) aufgetragen, auf der x-Achse ist die Abtriebsdrehzahl n_{ab} des Getriebes in UpM aufgetragen und parallel dazu die Fahrzeuggeschwindigkeit v in km/h. Das Diagramm zeigt die mathematische Beziehung zwischen Antriebsdrehzahl und Abtriebsdrehzahl für jeden Gang. Im Diagramm sind folgende Drehzahlen eingezeichnet: Die Leerlaufdrehzahl des Motors liegt beim gewählten Beispiel bei 600 UpM, die maximale Leistung des Motors liegt bei einer Drehzahl von 1800 UpM, und das maximale Drehmoment liegt bei einer Drehzahl von etwa 1000 UpM. Die Abregeldrehzahl liegt bei 2300 UpM. Erfindungsgemäß sind in diesem Diagramm eine untere Schaltgrenze von nₘᵢₙ= 850 UpM und eine obere Schaltgrenze von nₘₐₓ= 2100 UpM festgelegt. Sobald die Drehzahllinien der einzelnen Gänge, die im Diagramm als Strahlen C, 1, 2, 3, 4 5, 6, 7, 8 eingezeichnet sind, die obere oder die untere Schaltgrenze erreichen, soll der Schaltvorgang eingeleitet werden. Das Feld zwischen den beiden Schaltgrenzen nₘᵢₙ und nₘₐₓ wird als Schaltfläche F bezeichnet. Die Schaltfläche F definiert somit den optimalen Schaltbereich, damit der Motor des Kraftfahrzeuges weder zu hochtourig (nahe an der Abregeldrehzahl) oder zu niedertourig (zu nahe an der Leerlaufdrehzahl) gefahren wird.

Erfindungsgemäß ist die Schaltfläche F in Richtung der x-Achse in drei Zonen A, B, C unterteilt, und zwar durch zwei spezifische Werte der Abtriebsdrehzahl, nämlich N1 und N2: Der erste Drehzahlwert N1 ist definiert durch den Schnittpunkt "1" der unteren Schaltgrenze nₘᵢₙ mit der Gangdrehzahllinie des niedrigeren Ganges, der bei der Rangestufe "hoch" eingelegt ist. Der zweite Drehzahlwert N2 ist durch den Schnittpunkt "2" der oberen Schaltgrenze nₘₐₓ und der Gangdrehzahllinie des höheren Ganges, der bei der Rangestufe "niedrig" eingelegt werden kann, definiert.

Die Zone A entspricht dem Betriebszustand, in welchem die Abtriebsdrehzahl n_{ab}, welche von dem induktiven Drehzahlsensor erfasst wird, niedriger als oder gleich wie der Wert N1 ist (n_{ab} ≤ N1).

Die Zone B entspricht dem Betriebszustand, in welchem die Abtriebsdrehzahl n_{ab} größer als der Wert N2 ist (n_{ab} > N2).

Die Zone C entspricht dem Betriebszustand, in welchem die Getriebeabtriebsdrehzahl n_{ab} größer als N1 und kleiner als oder gleich wie N2 ist (N1 < n_{ab} ≤ N2).

Man erkennt, dass zwei dieser drei Zonen, nämlich die Zone A und die Zone B in einer eindeutigen Beziehung mit der erforderlichen Rangestufe "niedrig" oder "hoch" stehen. Wenn das Getriebe in der Zone A arbeitet, d. h. wenn n_{ab} ≤ N1 ist, dann muss - welcher Getriebegang auch immer eingelegt sein mag - die Rangegruppe in der Stufe "niedrig" sein, oder sie muss in die Stufe auf "niedrig" geschaltet werden, weil nur die niedrige Geschwindigkeit der Rangestufe in der Zone A arbeiten kann. In dieser Situation sind ebenso der "Niedriggang" (oft auch "Crawler" oder Kriechgang genannt) und die Rückwärtsgänge natürlich von Interesse.

Wie bereits erwähnt, kann eine elektronische Steuereinheit mittels eines induktiven Sensors die Getriebeabtriebsdrehzahl erfassen, damit die Betriebszone A identifizieren und damit sowohl die Stufe "niedrig" der Rangegruppe voraussehen als auch vorwählen.

Wenn das Getriebe in der Zone B arbeitet, d. h. wenn n_{ab} > N2 ist, dann muss die Rangegruppe - welcher Getriebegang auch immer eingelegt sein mag - in der Stufe "hoch" laufen oder in die Stufe "hoch" geschaltet werden, weil nur Gänge der Rangestufe "hoch" in der Zone B wirksam sein können. Wie oben erwähnt, kann eine elektronische Steuereinheit durch Messung der Getriebeabtriebsdrehzahl mittels eines induktiven Sensors die Betriebszone B identifizieren und sowohl die Stufe "hoch" der Rangegruppe erkennen als auch vorwählen. Wenn das Getriebe in der Zone C arbeitet, d. h. wenn N1 < n_{ab} ≤ N2 ist, kann die Rangestufe ("niedrig" oder "hoch") nicht eindeutig identifiziert werden, weil beide Rangestufen "hoch" oder "niedrig" erforderlich sein können. Eine zusätzliche Beziehung kann hier von Nutzen sein, nämlich die Identifizierung der Schaltgasse des zu schaltenden Ganges aufgrund des H-Schaltbildes. Durch einen geeigneten Sensor, welcher die Schaltbewegung des Schalthebels erfasst, kann die betreffende Schaltgasse "La" oder Lb" des H-Schaltbildes des zu schaltenden Ganges erkannt werden. Der Sensor kann von beliebiger Art sein, z. B. elektrisch oder pneumatisch und kann an beliebiger Stelle der Schaltbewegung zwischen Schalthebel und den im Getriebe angeordneten Zahnradkupplungen (Schaltmuffen) angeordnet sein.

Wie aus Fig. 6 ersichtlich - immer mit Bezug auf ein 9-Gang-Getriebe als Beispiel - sind in der Zone C folgende Gänge schaltbar:
- der 3. Gang (entsprechend dem 3. in der Rangestufe "niedrig") und der 4. Gang (entsprechend dem 4. in der Rangestufe "niedrig"), wobei beide Gänge in der Schaltgasse "Lb" liegen (vgl. Fig. 3 und Fig. 5, Bild 2),
- der 5. Gang (entsprechend dem 1. in der Rangestufe "hoch") und der 6. Gang (entsprechend dem 2. in der Rangestufe "hoch"), wobei beide Gänge in der Schaltgasse "La" liegen (vgl. ebenfalls Fig. 3 und Fig. 5, Bild 2).

Die elektronische Steuereinheit, welche die Betriebszone C durch den induktiven Drehzahlsensor erfasst hat, erkennt aufgrund der erfassten Schaltgasse die Vorwahl der Rangestufe "hoch" oder "niedrig": die Vorwahl der Rangestufe "niedrig" ist mit der Schaltgasse 3.- 4. Gang ("Lb") verknüpft, während die Vorwahl der Rangestufe "hoch" mit der Schaltgasse 1.- 2. Gang ("La") verknüpft ist.

Wenn beispielsweise der 6. Gang eingelegt werden soll, identifiziert der Schaltgassensensor die Schaltgasse 1.- 2. ("La"), während der 6. Gang gewählt wird; die elektronische Steuereinheit, die inzwischen die Zone C durch den induktiven Drehzahlsensor erkannt hat, verknüpft die erfasste Schaltgasse 1.- 2. ("La") mit der Vorwahl der Rangestufe "hoch".

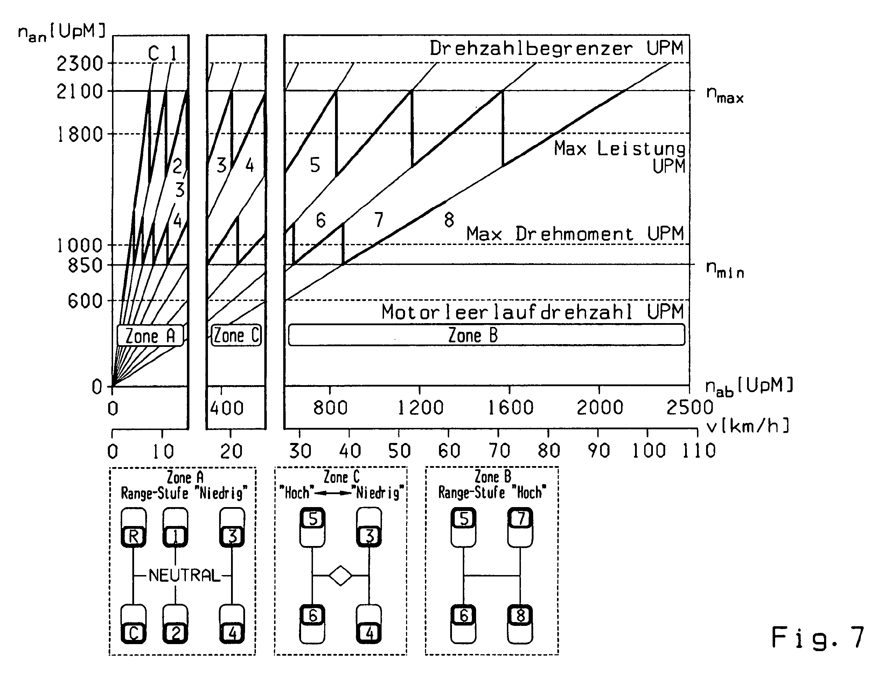

Fig. 7 zeigt ein Gangschaltungsszenario für ein 9-Gang-Getriebe (mit Bezug auf das Schaltbild Nr. 2 in Fig. 5). Das Drehzahldiagramm entspricht dem in Fig. 6, d. h. auf der y-Achse ist die Antriebsdrehzahl nₐₙ in UpM, auf der x-Achse sind die Abtriebsdrehzahl n_{ab} in UpM und die Fahrzeuggeschwindigkeit v in km/h aufgetragen. Das Drehzahldiagramm für die einzelnen Gänge ist bezogen auf ein Fahrzeug mit einem Motor, dessen maximales Drehmoment bei 1000 UpM anliegt, dessen maximale Leistung bei 1800 UpM anliegt, welches eine Achsübersetzung von 2,93 und eine Getriebeübersetzung von 1 : 12, 9 sowie einen Reifenradius von 0,5 m aufweist. Das Szenario kann auch auf ein 8-Gang-Getriebe (mit Bezug zum Bild Nr. 1 gemäß Fig. 5) übertragen werden, welches analog zu dem Auslegungskonzept für das 9-Gang-Getriebe ist, jedoch ohne den Kriechgang (Crawler). In Fig. 7 sind zusätzlich zum Drehzahldiagramm die Schaltbilder für die Zonen A, C, B mit der jeweiligen Rangestufe dargestellt und bedürfen keiner weiteren Erläuterung. Die Erfindung ist auch auf ein 10-Gang-Getriebe entsprechend Bild 3 in Fig. 5 anwendbar.

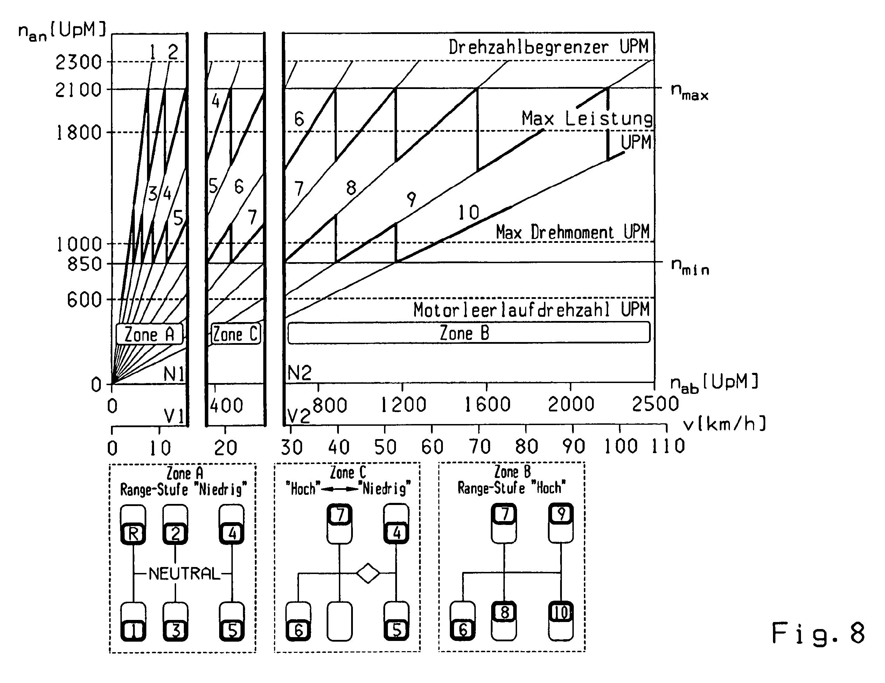

Fig. 8 zeigt ein Drehzahldiagramm für ein 10-Gang-Getriebe sowie die zu den Zonen A, C, B gehörenden Schaltbilder mit der jeweiligen Rangestufe. Das Drehzahldiagramm entspricht einem Fahrzeug mit einer Achsübersetzung von 2,93 und einer Getriebeübersetzung von 1 : 14,8 sowie einem Reifenradius von 0,5 m. Handschaltgetriebe mit einer Gangzahl von mehr als 10 besitzen in der Regel eine Splitgruppe mit zwei Splitstufen (Splitdrehzahlen), wobei die Splitgruppe in das Hauptgetriebe und teilweise auch in die Rangegruppe integriert oder im Gehäuse der Rangegruppe untergebracht ist. Derartige Getriebe besitzen 12,13,14 und 16 Gänge - auch auf diese Getriebe ist die Erfindung anwendbar.

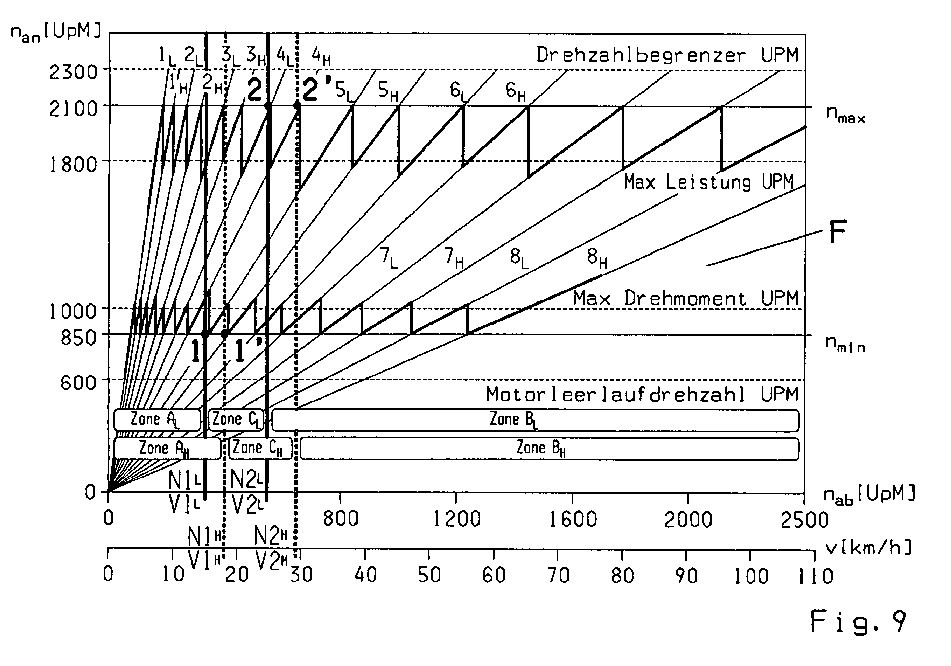

Fig. 9 zeigt ein Drehzahldiagramm mit einer wirksamen Schaltfläche F, welche durch eine untere Schaltgrenze nₘᵢₙ und eine obere Schaltgrenze nₘₐₓ begrenzt wird, für ein Getriebe mit 16 Gängen, d. h. mit einer Splitgruppe. Das Drehzahldiagramm ist nach den gleichen Regeln und Definitionen, wie oben zu Fig. 6 ausgeführt, erstellt. Ebenso sind die drei Zonen A, B, C analog zu den vorherigen Diagrammen definiert. Allerdings sind die Bezeichnungen des niedrigen Ganges in der Rangestufe "hoch" und des höheren Ganges in der Rangestufe "niedrig" infolge der Splitgruppe geändert. Die Splitstufe "niedrig" oder "hoch" wird durch den Splitschalter am Schaltknopf vorgewählt, bevor der Schaltvorgang eingeleitet wird; dies bedeutet, dass wenn die Splitstufe "niedrig" vorgewählt ist, dann ist der niedrige Gang in der Rangestufe "hoch" der 9. Gang, entsprechend der Bezeichnung 5 L im Hauptgetriebe. Der 10. Gang dagegen, entsprechend der Bezeichnung 5H im Hauptgetriebe, liegt vor, wenn die Splitstufe "hoch" vorgewählt ist. Ebenso ist der höhere Gang in der Rangestufe "niedrig" der 7., entsprechend der Bezeichnung 4L im Hauptgetriebe, wenn die Splitstufe "niedrig" vorgewählt ist. Dagegen liegt der 8. Gang, entsprechend der Bezeichnung 4H im Hauptgetriebe, vor, wenn die Splitstufe "hoch" vorgewählt ist. Aufgrund dieser Tatsache verändern die Zonen A, B, C ihre Position in der Schaltfläche, und zwar im Verhältnis der vorgewählter Splitstufe ("niedrig" oder "hoch"), wie es in Fig. 9 dargestellt ist. Die Schnittpunkte "1" und "2" verändern ihre Werte in N1_{L} und N2_{L}, sobald die Splitgruppe "niedrig" vorgewählt ist, und in N1_{H} und N2_{H}, sobald dagegen die Splitstufe "hoch" vorgewählt wird.

Die elektronische Steuereinheit kann die Vorwahl der Splitstufe durch die Position des Splitschalters erfassen, der ein elektrischer oder ein pneumatischelektrische Schalter sein kann, und kann ebenso die Positionen der Zonen A, B und C einstellen. Die Vorwahl der Rangestufe wird nach dem gleichen Verfahren vorgenommen wie oben beschrieben.

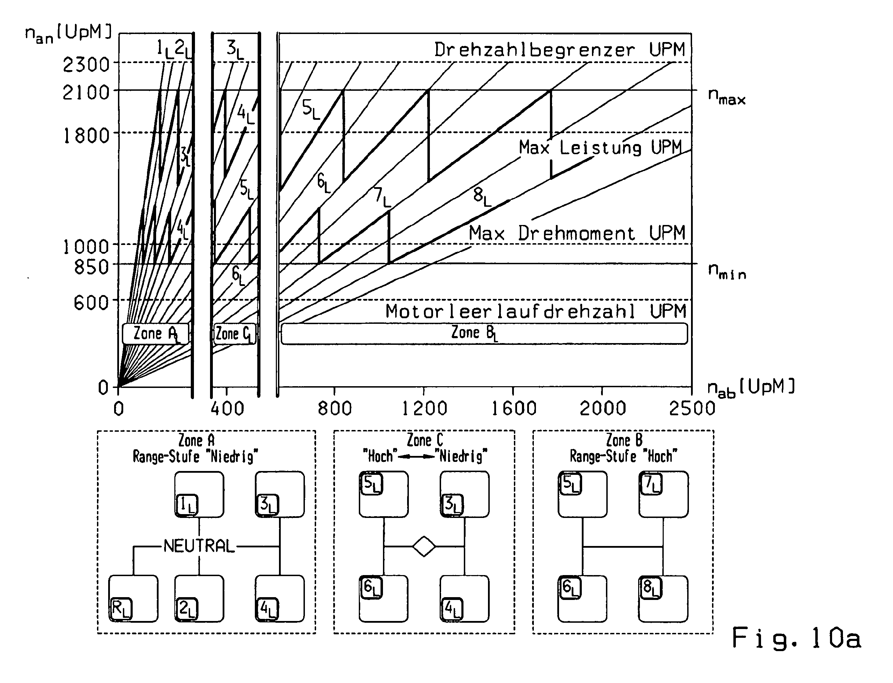

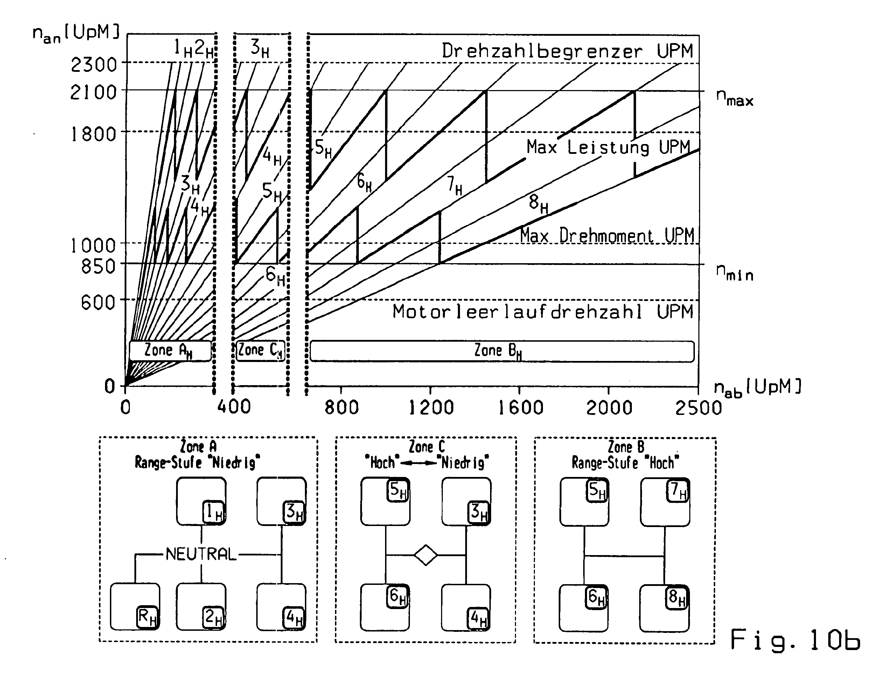

Fig. 10 zeigt ein Gangschaltungsszenario für ein 16-Gang-Getriebe (mit Bezug zu dem Schaltbild Nr. 7 in Fig. 5). Das Gangdrehzahldiagramm bezieht sich auf ein Fahrzeug, bei welchem das maximale Drehmoment des Motors bei 1000 UpM anliegen, die maximale Leistung bei 1800 UpM anliegen, das Achsübersetzungsverhältnis bei 2,93, das Getriebeübersetzungsverhältnis bei 1 : 16,4 und der Reifenradius bei 0,5 m liegen. Das obere Diagramm zeigt die Gangdrehzahllinien 1 L, 2L, 3L, ... bis 8L mit den Zonen A_{L}, B_{L} und C_{L} für die Splitstufe "niedrig" (L = niedrig). Das untere Drehzahldiagramm zeigt die Gangdrehzahllinien 1 H, 2H, 3H, ... bis 8H sowie die verschobenen Zonen A_{H}, B_{H}, C_{H} für die Splitstufe "hoch" (H = hoch). Zusätzlich sind für jedes Diagramm seitlich die Schaltbilder mit der jeweiligen Rangestufe angegeben.

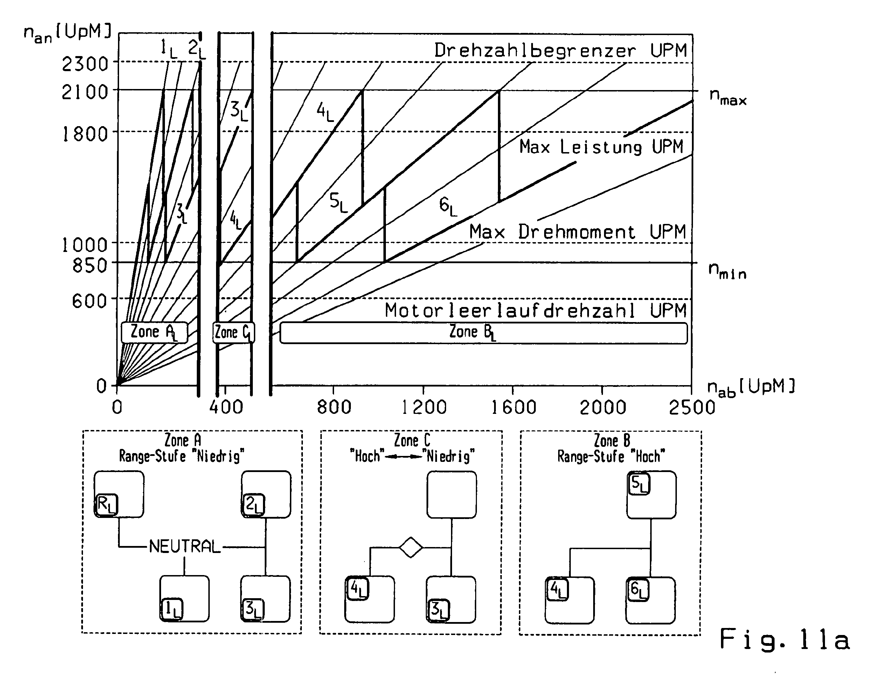

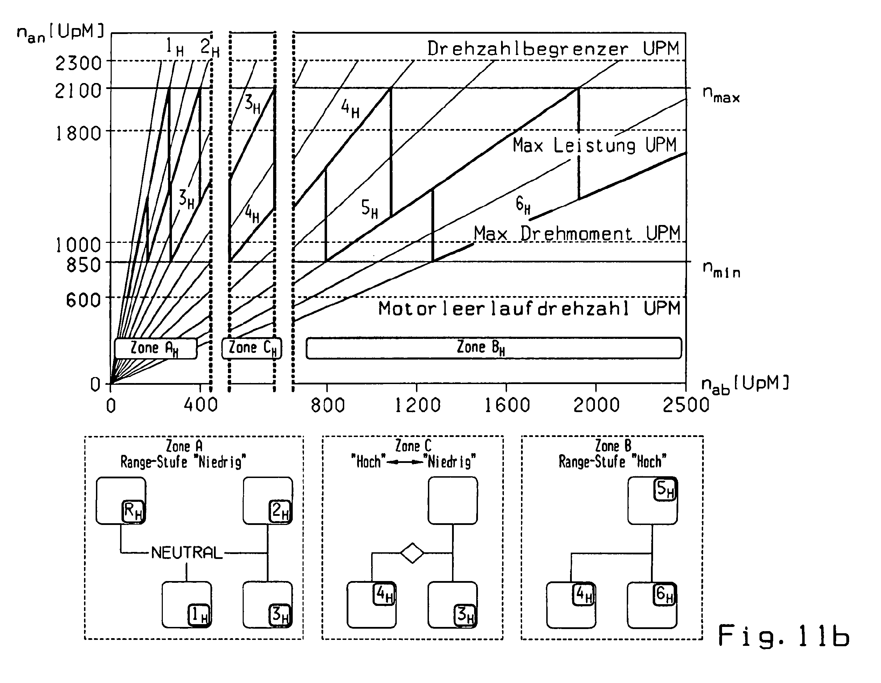

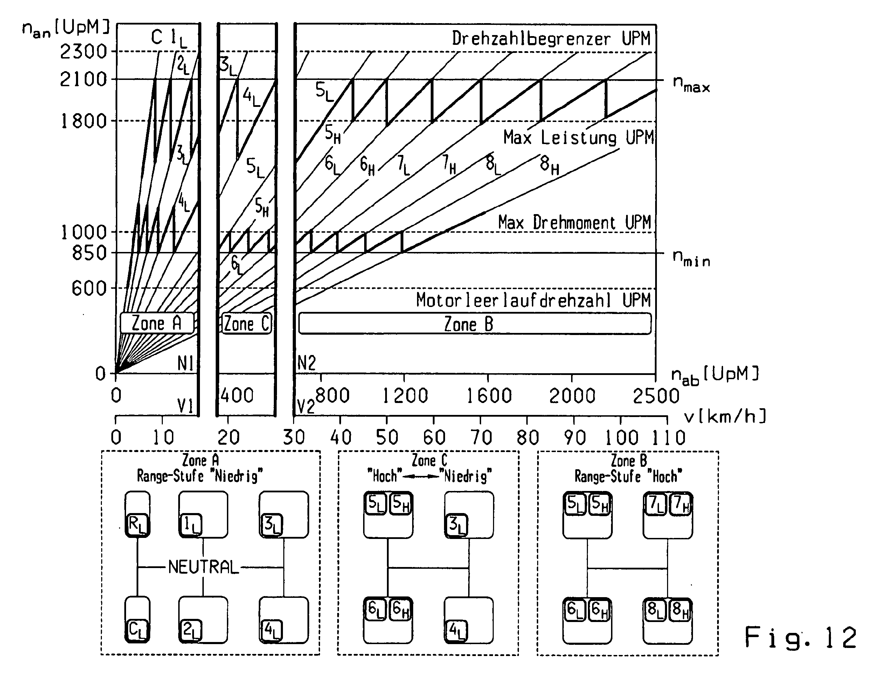

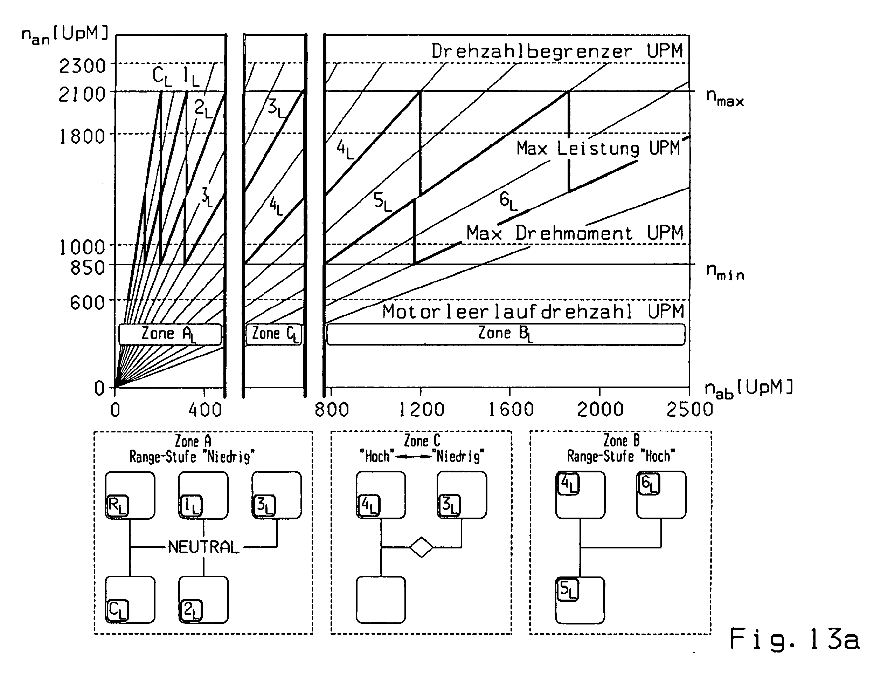

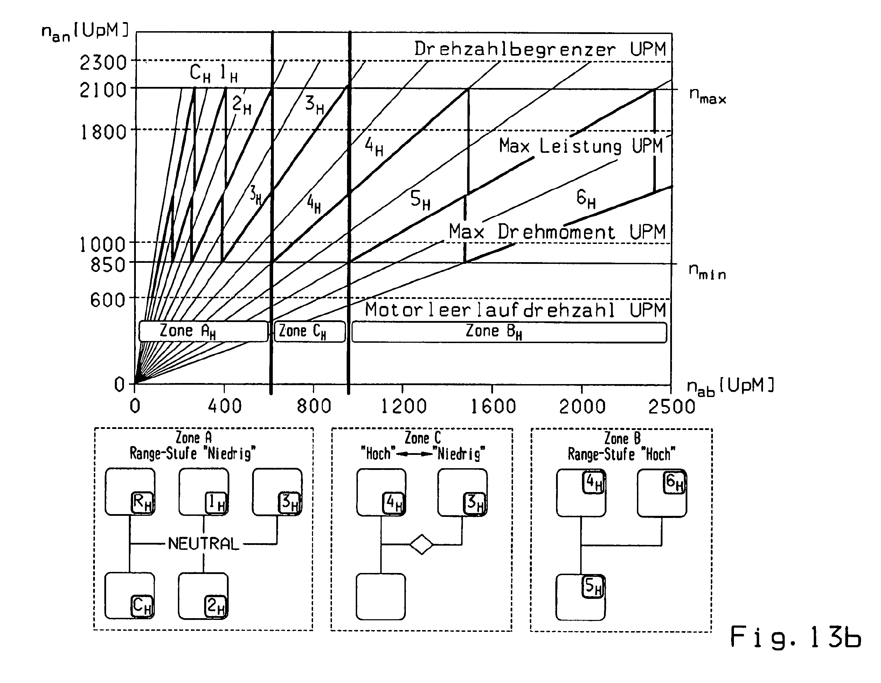

**Fig. 11****,****12****,****13** zeigen Anwendungen der Erfindung für ein 12-Gang-Getriebe (mit Bezug auf das Schaltbild Nr. 4 in Fig. 5), für ein 13-Gang-Getriebe (mit Bezug auf das Schaltbild Nr. 5 gemäß Fig. 5)und für ein 14-Gang-Getriebe (mit Bezug auf das Schaltbild Nr. 6 gemäß Fig. 5). Die Diagramme beziehen sich auf ein Fahrzeug, bei welchem das maximale Motordrehmoment bei 1000 UpM und die maximale Leistung bei 1800 UpM anliegt, das Achsübersetzungsverhältnis 2,93, das Getriebeübersetzungsverhältnis 1:12,9 und der Reifenradius 0,5 m beträgt. Der Index L in den Diagrammen bedeutet wiederum Splitstufe "niedrig" (L = niedrig), während der Index H für Splitstufe "hoch" (H = hoch) steht. Neben den Drehzahldiagrammen sind die betreffenden Schaltbilder für die in den jeweiligen Zonen schaltbaren Gänge dargestellt.

Zusammenfassend kann festgestellt werden, dass die vorliegende Erfindung auf folgendem Verfahrenskonzept beruht:
- für Getriebe ohne Splitgruppe wird die elektronische Steuereinheit durch Definition und Eingabe der Werte "N1" und "N2" programmiert;
- für Getriebe mit Splitgruppe wird die elektronische Steuereinheit durch Definition, Eingabe und Speicherung der Werte "N1L", N2L", "N1H" und "N2H" in UpM programmiert;
- die Betriebszonen A oder B oder C werden kontinuierlich erfasst, wenn das Getriebe läuft, und zwar durch den induktiven Drehzahlsensor, welcher die Abtriebsdrehzahl (Drehzahl der Getriebeabtriebswelle) in UpM erfasst;
- Vorwahl der Rangestufe "niedrig", wenn das Getriebe in der Betriebszone A läuft, oder
- Vorwahl der Rangestufe "hoch", wenn das Getriebe in der Betriebszone B läuft, oder
- Vorwahl der Rangestufe "hoch", wenn das Getriebe in der Zone C läuft und zwischenzeitlich die Schaltgasse "La" gewählt wird, oder
- Vorwahl der Rangestufe "niedrig", wenn das Getriebe in der Zone C läuft und zwischenzeitlich die Schaltgasse "Lb" gewählt wird.

Der Gang, von dem der Schaltvorgang ausgeht, hat keinen Einfluss auf die Überwachung des Schaltvorganges und der Schaltstrategie. Die vorliegende Erfindung ist auf von Hand schaltbare Stufengetriebe anwendbar, welche eine Rangegruppe aufweisen, welche die Gänge des Hauptgetriebes verdoppelt, d. h. Getriebe mit 8, 9, 10, 12, 13, 14 und 16 Gängen und einem Schaltbild des Typs "Einfach-H", dessen Schema in Fig. 5 dargestellt ist.

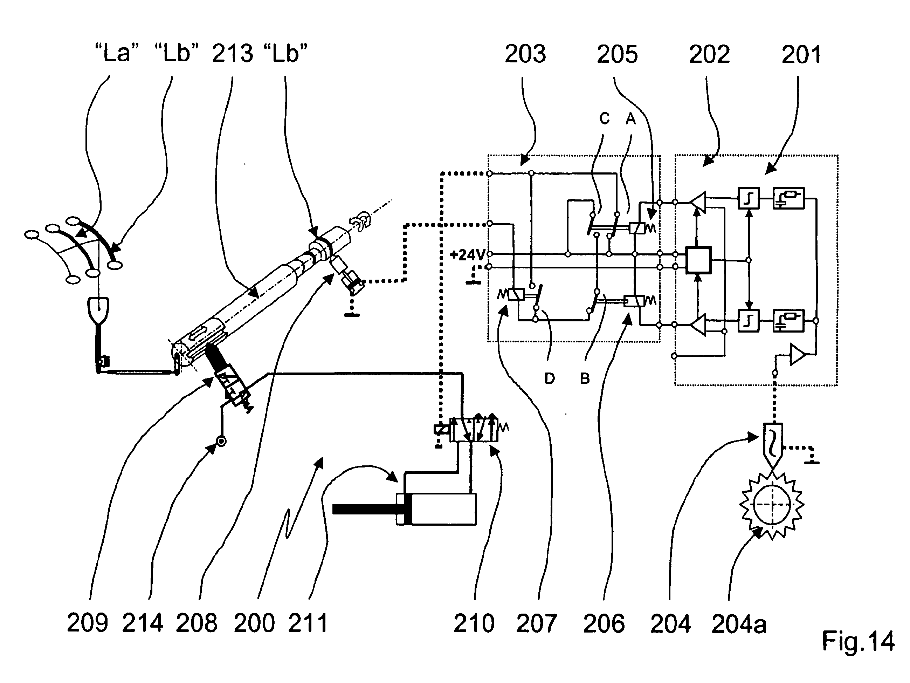

**Fig. 14** zeigt eine Regeleinrichtung 200 zur automatischen Schaltung einer Rangestufe. Die Regeleinrichtung 200 umfasst eine elektronische Steuereinheit 201, welche zwei Module, ein erstes elektronisches Modul 202 und ein zweites elektronisches Modul 203 aufweist. Die Regeleinrichtung 200 umfasst ferner einen induktiven Drehzahlsensor 204, welcher an der Abtriebswelle des Getriebes angeordnet ist und ein Drehzahlsignal erzeugt. Die Regeleinrichtung 200 umfasst ferner ein Schaltelement 213, welches der in den Fig. 3 und 4 dargestellten Getriebeschaltwelle 106 entsprechen kann. Auf dem Schaltelement 213 sind zwei unterschiedliche Nocken angeordnet, welche den oben beschriebenen Schaltgassen La, Lb entsprechen - einer der beiden Nocken ist durch "Lb" gekennzeichnet. Den beiden Nocken auf dem Schaltelement 213 ist ein elektrischer Schalter 208 zugeordnet, welcher jeweils den einen oder den anderen Nocken kontaktiert. Das Schaltelement 213 führt einerseits eine Drehbewegung um seine Längsachse aus, was der Schaltbewegung in einer Schaltgasse (La, Lb) entspricht. Das Schaltelement 213 führt andererseits auch eine Längsbewegung in Richtung seiner Längsachse aus, was der Wählbewegung des Schalthebels in das Wählprogramm entspricht. Die Regeleinrichtung 200 umfasst ferner einen pneumatischen Stellmotor 211, auch Druckluftzylinder genannt, welcher von einem elektro-pneumatischen Umschaltventil 210 angesteuert wird.

Das erste elektronische Modul 202 umfasst elektronische Einrichtungen, die geeignet sind, das Ausgangssignal des induktiven Drehzahlsensors 204, auch Drehzahlsignal genannt, zu verarbeiten. Das zweite elektronische Modul 203 umfasst drei elektromagnetische Relais 205, 206, 207. Das vom Drehzahlsensor 204 kommende Drehzahlsignal ist als Rechtecksignal ausgebildet, dessen Frequenz sich aus dem Produkt aus Getriebeabtriebsdrehzahl und Zähnezahl des Impulsrades 204a auf der Abtriebswelle ergibt. Das Modul 202 verstärkt das Drehzahlsignal in zwei Zweigleitungen: Die erste Zweigleitung weist elektronische Einrichtungen auf, welche die Frequenz des Eingangssignals mit der Frequenz eines Wertes vergleichen, der dem Drehzahlwert N1 (vgl. Beschreibung zu Fig. 6) entspricht, wobei es das elektromagnetische Relais 205 des zweiten Moduls 203 erregt, wenn die Frequenz des Eingangssignals höher ist als die dem Drehzahlwert N1 entsprechende Frequenz, d. h. wenn n_{ab} > N1. Die zweite Zweigleitung besitzt elektronische Einrichtungen, welche die Frequenz des Eingangssignals mit einer dem Drehzahlwert N2 entsprechenden Frequenz vergleichen, wobei das elektromagnetische Relais 206 des zweiten Moduls 203 erregt wird, wenn die Frequenz des Eingangssignals höher als die dem Drehzahlwert N2 entsprechende Frequenz ist, d. h. wenn n_{ab} > N2 ist.

Die elektromagnetischen Relais 205, 206, 207 können erregt oder nicht erregt sein, je nachdem, welcher Wert für die Abtriebsdrehzahl n_{ab} vorliegt, d. h. ob das Getriebe in der Betriebszone A, B oder C arbeitet.

In Zone A, d. h. n_{ab} ≤ N1 gilt:
- das Relais 205 ist nicht erregt, der Kontakt A ist geschlossen, Kontakt C ist offen; das Relais 206 ist nicht erregt, Kontakt B ist geschlossen. Das Relais 207 ist nicht wirksam.

In Zone B, d. h. n_{ab} > N2 gilt:
- das Relais 205 ist erregt, der Kontakt A ist offen, Kontakt C ist geschlossen; das Relais 206 ist erregt, Kontakt B ist offen. Das Relais 207 ist nicht wirksam.

In Zone C, d. h. N1 < n_{ab} ≤ N2:
- das Relais 205 ist erregt, Kontakt A ist offen, Kontakt C ist geschlossen; Relais 206 ist nicht erregt, Kontakt B ist geschlossen. Das Relais 207 ist nicht wirksam.

Der elektrische Schalter 208, der am Schaltelement 213 angeordnet ist, erfasst über die Nockenform die Schaltgasse. Wenn der zu schaltende Gang in der Schaltgasse "La" liegt, ist der Kontakt des Schalters 208 offen. Andererseits ist der Kontakt des Schalters 208 geschlossen, wenn der zu schaltende Gang in der Schaltgasse "Lb" liegt, wodurch das Relais 207 erregt und der Kontakt D geschlossen wird, falls das Getriebe zwischenzeitlich in der Zone C arbeitet.

Das pneumatische 5-Wege-Ventil 210 schaltet die Druckluftzufuhr zum pneumatischen Stellmotor 211 für die Rangegruppe. Wenn die Magnetspule des Ventils 210 erregt ist, wird die Rangestufe "niedrig" vorgewählt, während die Rangestufe "hoch" vorgewählt wird, wenn die Magnetspule nicht erregt ist.

Die Betätigung der Rangeschaltung erfolgt nur, wenn kein Gang im Hauptgetriebe eingelegt ist, d. h. wenn sich das Getriebe in der Position "neutral" befindet.

**Fig.14** zeigt die Systemauslegung von einem Getriebe mit Splitgruppe und seine Funktion, wenn sich das Getriebe im Betriebszustand der Zone A befindet. Das Relais 205 ist nicht erregt, der Kontakt A ist geschlossen, infolgedessen wird die Magnetspule des Umschaltventils 210 erregt, wodurch die Rangestufe "niedrig" vorgewählt wird, unabhängig von der Schaltgasse des zu schaltenden Ganges, weil der Schalter 208 nicht wirksam ist. (Der Druckluftkolben im Druckluftzylinder 211 befindet sich auf der linken Seite.)

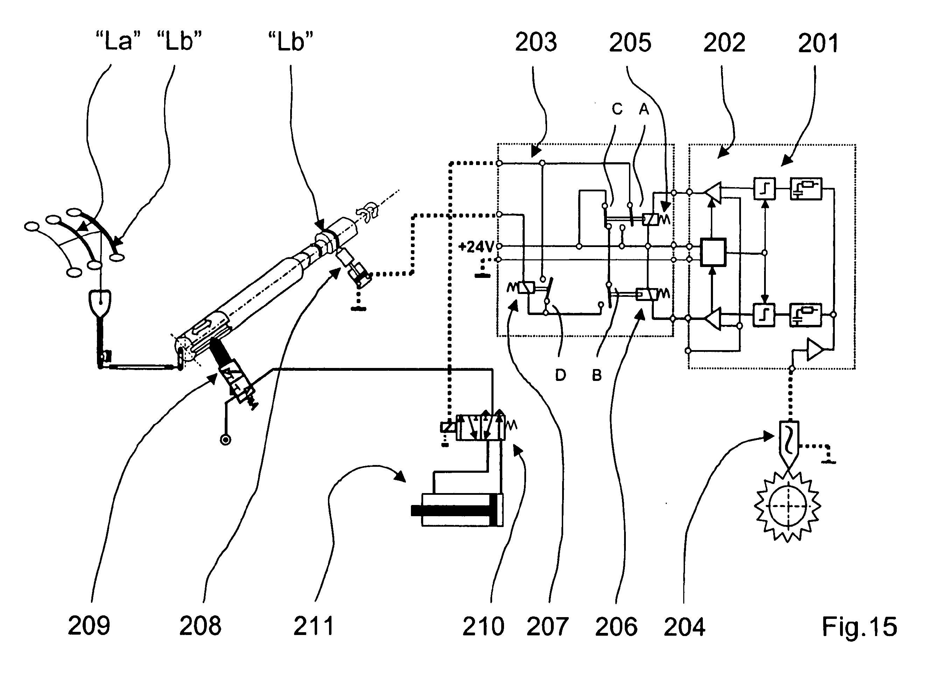

**Fig. 15** zeigt die funktionelle Situation, wenn sich das Getriebe in der Zone B befindet. Die zeichnerische Darstellung sowie die Bezugszahlen entsprechen grundsätzlich der vorherigen Figur. Das Relais 205 ist erregt, der Kontakt A ist offen, und der Kontakt C ist geschlossen. Das Relais 206 ist erregt, und der Kontakt B ist offen. Die Magnetspule des Umschaltventils 210 für die Rangegruppe ist nicht erregt, wodurch die Rangestufe "hoch" vorgewählt wird, unabhängig von der Schaltgasse des zu schaltenden Ganges, weil der Schalter 208 nicht aktiviert ist. (Der Druckluftkolben befindet sich auf der rechten Seite des Druckluftzylinders 211.)

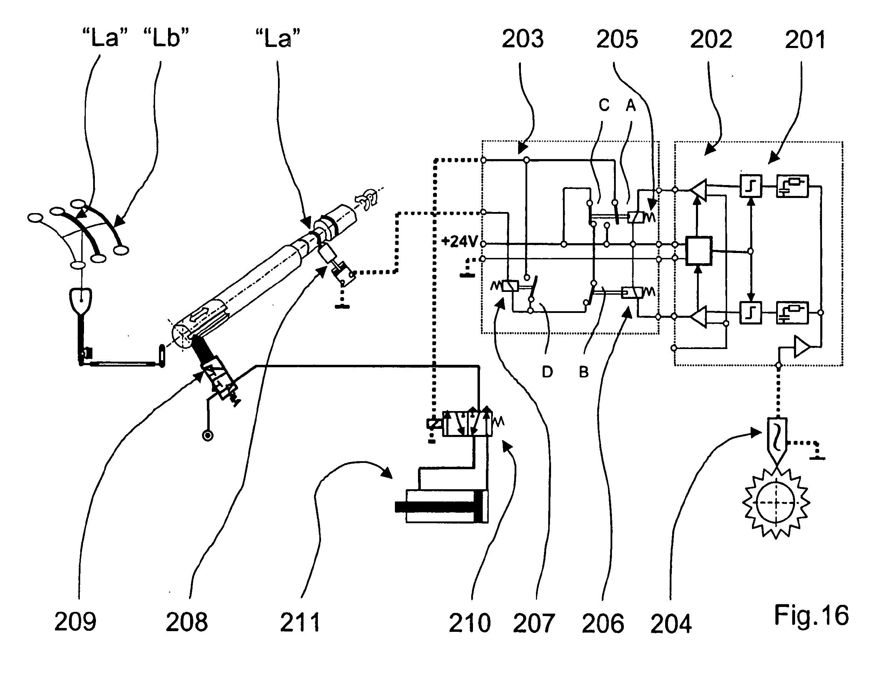

**Fig. 16** zeigt die funktionelle Situation, wenn sich das Getriebe in der Zone C befindet und der zu schaltende Gang in der Schaltgasse "La" liegt. Beide Relais 205 und 206 sind erregt, der Kontakt A ist offen, und der Kontakt B ist geschlossen. Der Kontakt C ist ebenfalls geschlossen. Das elektromagnetische Relais 207 ist jetzt aktiviert, der Schalter 208 ist offen, dadurch ist das Relais 207 nicht erregt, der Kontakt D ist offen, sodass die Magnetspule des Umschaltventils 210 nicht erregt ist, wodurch die Rangestufe "hoch" vorgewählt wird (der Druckluftkolben im Druckluftzylinder 211 befindet sich auf der rechten Seite.)

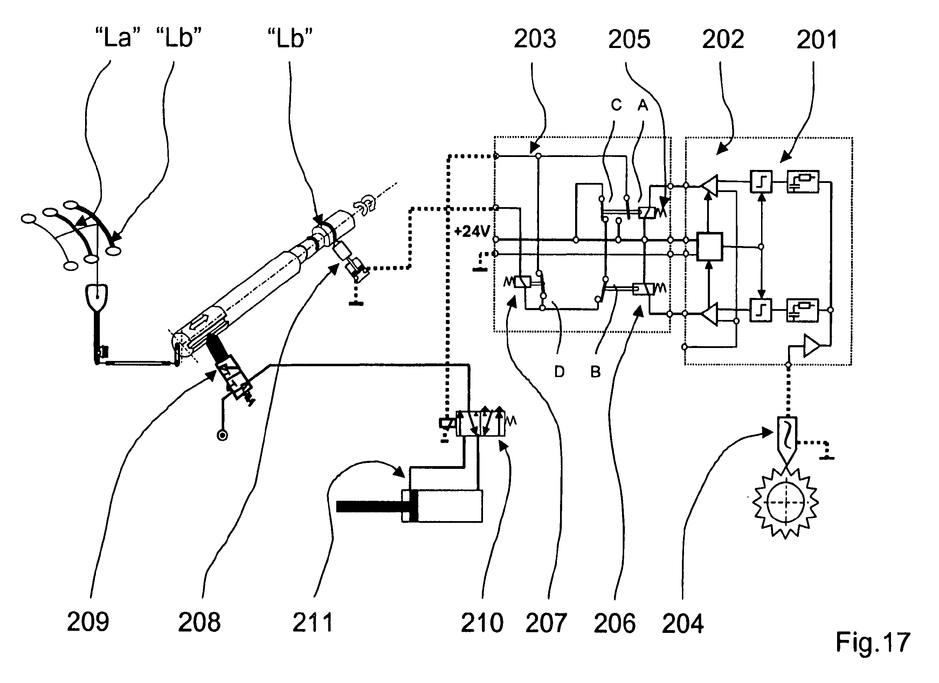

**Fig. 17** zeigt die funktionelle Situation, wenn das Getriebe in der Zone C läuft und der zu schaltende Gang in der Schaltgasse "Lb" liegt. Beide Relais 205 und 206 sind erregt, der Kontakt A ist offen, und der Kontakt B ist geschlossen, der Kontakt C ist ebenfalls geschlossen. Das Relais 207 ist aktiviert, der Schaltgassenschalter 208 ist geschlossen, daher ist das Relais 207 erregt, der Kontakt D ist geschlossen, die Magnetspule des Umschaltventils 210 für die Rangegruppe ist erregt, wodurch die Rangestufe "niedrig" geschaltet wird (der Druckluftkolben befindet sich im Druckluftzylinder 211 auf der linken Seite).

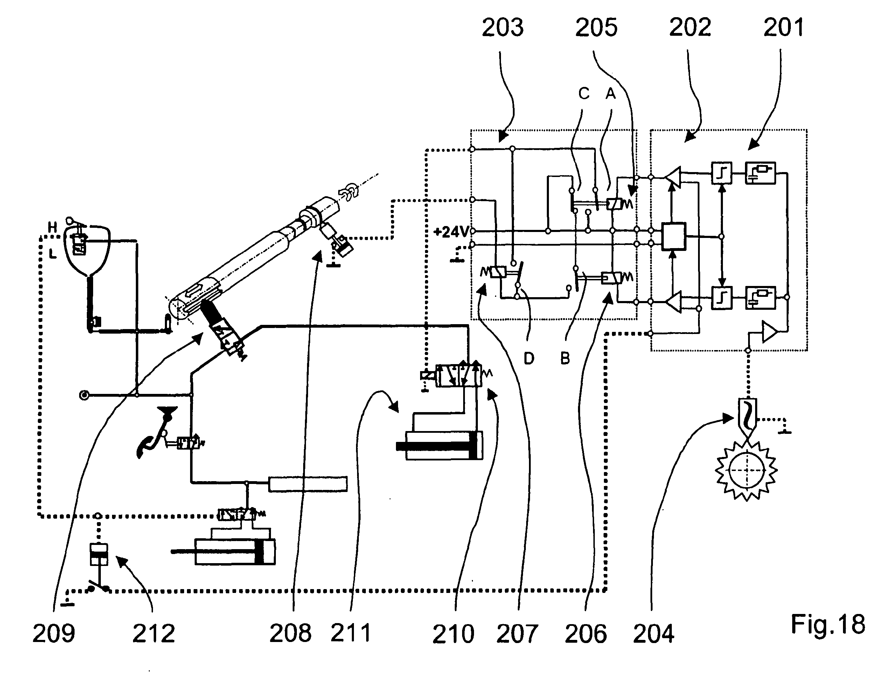

**Fig. 18** zeigt die Regeleinrichtung von Getrieben mit einer Splitgruppe, wobei die Splitstufenvorwahl durch einen elektrischen Druckluftschalter 212 erfasst wird, welcher an die elektronische Steuereinheit 201 ein Signal schickt, um die Frequenzen der Einstellwerte N1L, N2L oder N1H, N2H, je nach der vorgewählten Splitstufe, auszuwählen - wie oben beschrieben. Die Vorwahl der Rangestufe ("niedrig" oder "hoch") entspricht dem oben beschriebenen Verfahren.

### Bezugiszeichen

- 1: Handschaltgetriebe
- 1A: Hauptgetriebe
- 1B: Rangegruppe
- 2: mechanische Verbindung
- 2A: Schalthebel
- 2B: Rangegruppenschalter
- 2C: Splitgruppenschalter
- 3: Umschaltventil (Rangegruppe)
- 4: Auslöseventil
- 5: Druckluftzylinder (Rangegruppe)
- 6: Getriebeschaltwelle
- 7: Umschaltventil (Splitgruppe)
- 8: Druckluftzylinder (Splitgruppe)
- 9: Kupplungspedal
- 10: Auslöseventil

- 101: Handschaltgetriebe
- 101A: Hauptgetriebe
- 101B: Rangegruppe
- 102: mechanische Verbindung
- 102A: Schalthebel
- 102B: Rangegruppenschalter
- 102C: Splitgruppenschalter
- 103: Umschaltventil (Rangegruppe)
- 104: Auslöseventil
- 105: Druckluftzylinder (Rangegruppe)
- 106: Getriebeschaltwelle
- 107: Umschaltventil (Splitgruppe)
- 108: Druckluftzylinder (Splitgruppe)
- 109: Kupplungspedal
- 110: Auslöseventil
- 111: Elektronische Steuereinheit
- 111a: Signalleitung
- 111b: Signalleitung
- 111c: Signalleitung
- 111d: Signalleitung
- 112: Drehzahlsensor
- 113: Elektrischer Schalter (Sensor)
- 114: Elektrischer Druckluftschalter (Sensor)
- 115: Druckluftspeicher

- 200: Regeleinrichtung
- 201: Elektronische Steuereinrichtung
- 202: erstes elektronisches Modul
- 203: zweites elektronisches Modul
- 204: Drehzahlsensor
- 204A: Impulsrad
- 205: Elektromagnetisches Relais
- 206: Elektromagnetisches Relais
- 207: Elektromagnetisches Relais
- 208: Elektrischer Schalter
- 209: Pneumatisches 3-Wege-Ventil
- 210: Pneumatisches 5-Wege-Ventil
- 211: Pneumatischer Stellmotor
- 212: Schalter
- 213: Schaltelement
- 214: Druckluftspeicher

## Patentansprüche

1. Verfahren zur automatischen Schaltung der Stufen "hoch" oder "niedrig" einer Rangegruppe (101 B) eines Stufengetriebes (101), **gekennzeichnet** t durch folgende Verfahrensschritte:
- Erfassen der Abtriebsdrehzahl n_{ab} des Getriebes,
- Erfassen der Schaltgasse des zu schaltenden Ganges,
- Definition von drei Bereichen der Abtriebsdrehzahl, nämlich einen niedrigen Bereich (Zone A), einen hohen Bereich (Zone B) und einen mittleren Bereich (Zone C) für die Vorwahl der Rangestufe "hoch" oder "niedrig".
- Vorwählen der Rangestufe "niedrig" bei einer Abtriebsdrehzahl im Bereich der Zone A unabhängig von dem zu schaltenden Gang oder
- Vorwählen der Rangestufe "hoch" bei einer Abtriebsdrehzahl im Bereich der Zone B unabhängig von dem zu schaltenden Gang oder
- Vorwählen der Rangestufe "hoch" oder "niedrig" bei einer Abtriebsdrehzahl im Bereich der Zone C in Abhängigkeit von dem zu schaltenden Gang respektive der zugehörigen Schaltgasse.

2. Verfahren nach Anspruch 1, **dadurch gekennzeichnet, dass**
- der niedrige Bereich (Zone A) dem Betriebszustand entspricht, in welchem die Abtriebsdrehzahl n_{ab} niedriger als oder gleich einem Wert N1 ist (n_{ab} ≤ N1).
- der hohe Bereich (Zone B) dem Betriebszustand entspricht, in welchem die Abtriebsdrehzahl n_{ab} größer als ein Wert N2 ist (n_{ab} > N2) und
- der mittlere Bereich (Zone C) dem Betriebszustand entspricht, in welchem die Getriebeabtriebsdrehzahl n_{ab} größer als N1 und kleiner als oder gleich N2 ist (N1 < n_{ab} ≤ N2).

3. Verfahren nach Anspruch 1 oder 2, **dadurch gekennzeichnet, dass** bei Vorhandensein einer Splitgruppe mit zwei Splitstufen die Positionen der Bereiche (Zonen A, B und C) im Verhältnis der vorgewählten Splitstufe verändert werden, wodurch für die niedrige Splitstufe drei Bereiche (Zonen A_{L}, B_{L} und C_{L}) entstehen und für die hohe Splitstufe drei andere Bereiche (Zonen A_{H}, B_{H} und C_{H}) entstehen.

4. Verfahren nach Anspruch 3, **dadurch gekennzeichnet, dass**
- die Zone A_{L} dem Betriebszustand entspricht, in welchem die Abtriebsdrehzahl n_{ab} niedriger als oder gleich einem Wert N1_{L} ist (n_{ab} ≤ N1_{L}).
- die Zone A_{H} dem Betriebszustand entspricht, in welchem die Abtriebsdrehzahl n_{ab} niedriger als oder gleich einem Wert N1_{H} ist (n_{ab} ≤ N1_{H}).
- die Zone B_{L} dem Betriebszustand entspricht, in welchem die Abtriebsdrehzahl n_{ab} größer als ein Wert N2_{L} ist (n_{ab} > N2_{L}).
- die Zone B_{H} dem Betriebszustand entspricht, in welchem die Abtriebsdrehzahl n_{ab} größer als ein Wert N2_{H} ist (n_{ab} > N2_{H}).
- die Zone C_{L} dem Betriebszustand entspricht, in welchem die Getriebeabtriebsdrehzahl n_{ab} größer als N1_{L} und kleiner als oder gleich N2_{L} ist (N1_{L} < n_{ab} ≤ N2_{L}) und
- die Zone C_{H} dem Betriebszustand entspricht, in welchem die Getriebeabtriebsdrehzahl n_{ab} größer als N1_{H} und kleiner als oder gleich N2_{H} ist (N1_{H} < n_{ab} ≤ N2_{H}).

## Claims

1. Method for automatically engaging the stages "high" or "low" of a range unit (101B) of a multi-stage transmission (101), **characterized by** the following method steps:
- detecting the drive output rotational speed n_{ab} of the transmission,
- detecting the gearshift lane of the gear to be engaged,
- defining three ranges of the drive output rotational speed, specifically a low range (zone A), a high range (zone B) and a middle range (zone C) for the preselection of the range stage "high" or "low",
- preselecting the range stage "low" in the case of a drive output rotational speed in the range of zone A independently of the gear to be engaged, or
- preselecting the range stage "high" in the case of a drive output rotational speed in the range of zone B independently of the gear to be engaged, or
- preselecting the range stage "high" or "low" in the case of a drive output rotational speed in the range of zone C as a function of the gear to be engaged or the associated gearshift lane.

2. Method according to Claim 1, **characterized in that**
- the low range (zone A) corresponds to the operating state in which the drive output rotational speed n_{ab} is lower than or equal to a value N1 (n_{ab} ≤ N1),
- the high range (zone B) corresponds to the operating state in which the drive output rotational speed n_{ab} is higher than a value N2 (n_{ab} > N2),
- the middle range (zone C) corresponds to the operating state in which the transmission output rotational speed n_{ab} is higher than N1 and lower than or equal to N2 (N1 < n_{ab} ≤ N2).

3. Method according to Claim 1 or 2, **characterized in that**, in the presence of a splitter unit with two splitter stages, the positions of the ranges (zones A, B and C) are varied in relation to the preselected splitter stage, whereby three ranges (zones A_{L}, B_{L} and C_{L}) are generated for the low splitter stage and three other ranges (zones A_{H}, B_{H} and C_{H}) are generated for the high splitter stage.

4. Method according to Claim 3, **characterized in that**
- the zone A_{L} corresponds to the operating state in which the drive output rotational speed n_{ab} is lower than or equal to a value N1_{L} (n_{ab} ≤ N1_{L}),
- the zone A_{H} corresponds to the operating state in which the drive output rotational speed n_{ab} is lower than or equal to a value N1_{H} (n_{ab} ≤ N1_{H}),
- the zone B_{L} corresponds to the operating state in which the drive output rotational speed n_{ab} is higher than a value N2_{L} (n_{ab} > N2_{L}),
- the zone B_{H} corresponds to the operating state in which the drive output rotational speed n_{ab} is higher than a value N2_{H} (n_{ab} > N2_{H}),
- the zone C_{L} corresponds to the operating state in which the transmission output rotational speed n_{ab} is higher than N1_{L} and lower than or equal to N2_{L} (N1_{L} < n_{ab} ≤ N2_{L}), and
- the zone C_{H} corresponds to the operating state in which the transmission output rotational speed n_{ab} is higher than N1_{H} and lower than or equal to N2_{H} (N1_{H} < n_{ab} ≤ N2_{H}).

## Revendications

1. Procédé de changement de vitesse automatique des étages « haut » ou « bas » d'un groupe de rangs (101B) d'une boîte de vitesses à étages (101), **caractérisé par** les étapes de procédé suivantes :
- détection de la vitesse de rotation d'entraînement de sortie n_{ab} de la boîte de vitesses ;
- détection des gaz de changement de vitesse du rapport à passer ;
- définition de trois zones de la vitesse de rotation d'entraînement de sortie, notamment une région basse (zone A), une région haute (zone B) et une région centrale (zone C) servant pour la présélection de l'étage de rang « haut » ou « bas » ;
- présélection de l'étage de rang « bas » en présence d'une vitesse de rotation d'entraînement de sortie dans la région de la zone A indépendamment du rapport à passer ; ou
- présélection de l'étage de rang « haut » en présence d'une vitesse de rotation d'entraînement de sortie dans la région de la zone B indépendamment du rapport à passer ; ou
- présélection de l'étage de rang « haut » ou « bas » en présence d'une vitesse de rotation d'entraînement de sortie dans la région de la zone C en fonction du rapport respectif à passer des gaz de changement de vitesse associés.

2. Procédé selon la revendication 1, **caractérisé en ce que** :
- la région basse (zone A) correspond à l'état de fonctionnement dans lequel la vitesse de rotation d'entraînement de sortie n_{ab} est inférieure ou égale à une valeur N1 (n_{ab} ≤ N1) ;
- la région haute (zone B) correspond à l'état de fonctionnement dans lequel la vitesse de rotation d'entraînement de sortie n_{ab} est supérieure à une valeur N2 (n_{ab} > N2) ; et
- la région centrale (zone C) correspond à l'état de fonctionnement dans lequel la vitesse de rotation d'entraînement de sortie de boîte de vitesses n_{ab} est supérieure à N1 et inférieure ou égale à N2 (N1 < n_{ab} ≤ N2).

3. Procédé selon la revendication 1 ou 2, **caractérisé en ce qu'**en présence d'un groupe divisé à deux étages divisés, les positions des zones (zones A, B et C) dans le rapport de l'étage divisé présélectionné sont modifiées, trois zones (zones A_{L}, B_{L} et C_{L}) étant créées pour l'étage divisé inférieur et trois autres zones (zones A_{H}, B_{H} et C_{H}) étant créées pour l'étage divisé supérieur.

4. Procédé selon la revendication 3, caractérisé en ce qui:
- la zone A_{L} correspond à l'état de fonctionnement dans lequel la vitesse de rotation d'entraînement de sortie n_{ab} est inférieure ou égale à une valeur N1_{L} (n_{ab} ≤ N1_{L}) ;
- la zone A_{H} correspond à l'état de fonctionnement dans lequel la vitesse de rotation d'entraînement de sortie n_{ab} est inférieure ou égale à une valeur N1_{H} (n_{ab} ≤ N1_{H}) ;
- la zone B_{L} correspond à l'état de fonctionnement dans lequel la vitesse de rotation d'entraînement de sortie n_{ab} est supérieure à une valeur N2_{L} (n_{ab} > N2_{L});
- la zone B_{H} correspond à l'état de fonctionnement dans lequel la vitesse de rotation d'entraînement de sortie n_{ab} est supérieure à une valeur N2_{H} (n_{ab} > N2_{H}) ;
- la zone C_{L} correspond à l'état de fonctionnement dans lequel la vitesse de rotation d'entraînement de sortie de boîte de vitesses n_{ab} est supérieure à N1_{L} et inférieure ou égale à N2_{L} (N1_{L} < n_{ab} ≤ N2_{L}); et
- la zone C_{H} correspond à l'état de fonctionnement dans lequel la vitesse de rotation d'entraînement de sortie de boîte de vitesses n_{ab} est supérieure à N1_{H} et inférieure ou égale à N2_{H} (N1_{H} < n_{ab} ≤ N2_{H}).
